# DEMANDE DE BREVET EUROPEEN

(11) **EP 3 670 307 A1**
(43) Date de publication de la demande: **24.06.2020**
(21) Numéro de dépôt: 19215097.7
(22) Date de dépôt: 11.12.2019
(51) Int. Cl.: B62D 35/00, B62D 37/02

(54) **VOLET AERODYNAMIQUE ARTICULE**

(30) Priorité: 18.12.2018 FR 1873218
(71) Demandeur: Compagnie Plastic Omnium, 69007 Lyon (FR)
(72) Inventeur: PARRA, Stéphane, 01150 SAINTE-JULIE (FR); UTTER, Jérôme, 01150 SAINTE-JULIE (FR); CRETIER, Romain, 01150 SAINTE-JULIE (FR)
(74) Mandataire: LLR

(57) **Abrégé**

Volet aérodynamique (2) monté en rotation autour d'un premier axe (aa') sur une pièce de carrosserie (10), comprenant au moins une jambe de levage (3) articulé formée d'une première (31) et d'une deuxième (32) branche. La jambe de levage (3) est associée à un actionneur linéaire (4) se déplaçant entre une position déployée et une position rétractée entre deux limites de course pour faire passer alternativement le volet aérodynamique (2) d'une position sortie à une position rentrée. Lorsque le volet est en position sortie sous l'effet respectivement de la rétractation ou du déploiement de l'actionneur linéaire, et que la première (31) et la deuxième branche (32) font entre elles un angle égal à 180° additionné ou réduit respectivement d'une valeur comprise entre 1° d'angle et 5° d'angle, une force s'exerçant verticalement du haut vers le bas sur le volet aérodynamique (2) a pour effet de repousser l'actionneur linéaire (4) en limite de course respectivement en position rétractée ou en position déployée.

## Description

L'invention concerne le domaine des véhicules automobiles comportant des volets aérodynamiques situés à l'arrière du véhicule et destinés à stabiliser le véhicule à haute vitesse en augmentant l'appui au sol de l'arrière du véhicule.

De nombreux systèmes sont proposés par les constructeurs pour obtenir les effets évoqués ci-dessus.

La demande de brevet FR 1 756 208, non publiée à la date de dépôt de la présente demande, décrit un volet monté sur un ensemble de bielles animées par un bras de pilotage animé par un actionneur rotatif combinant un ou plusieurs mouvements de rotation simultanés.

La demande de brevet FR 1 756 888, non publiée à la date de dépôt de la présente demande, décrit un volet aérodynamique monté sur un jeu de biellettes coulissantes se déployant en effectuant des mouvements de translation et de rotation.

Ces dispositifs, destinés à des véhicules de haut de gammes aptes à rouler à des vitesses très élevées, ont pour objet de déplacer le volet entièrement au-dela du profil de la carrosserie, de manière à augmenter l'appui au sol de l'essieu arrière afin d'améliorer la stabilité du véhicule à haute vitesse tout en réduisant la trainée aérodynamique.

Ils présentent l'inconvénient d'engendrer des coûts de réalisation élevés en raison de la présence de mécanismes complexes. En particulier, ces mécanismes présentent des dispositifs de maintien du volet en position déployée qui sont consommateurs d'énergie ou qui nécessitent la mise en œuvre de moyens mécaniques complexes.

L'invention a notamment pour but de proposer un volet aérodynamique adapté à des véhicules de milieu de gamme agissant comme un becquet rétractable et permettant d'améliorer l'appui au dol de l'essieu arrière utilisant un mécanisme simplifié et donc plus économique que les mécanismes proposés par les documents cités ci-dessus.

A cet effet l'invention a pour objet un volet aérodynamique monté en rotation autour d'un premier axe sur une pièce de carrosserie de véhicule automobile. Ce volet comprend au moins une jambe de levage formée d'une première et d'une deuxième branche comprenant chacune une première et une deuxième extrémité, les premières extrémités de chacune des branches étant liées l'une à l'autre par une articulation mobile en rotation autour d'un deuxième axe, la seconde extrémité de la première branche étant montée en rotation autour d'un troisième axe disposé sur le volet aérodynamique et la seconde extrémité de la deuxième branche (32) étant montée en rotation autour d'un quatrième axe disposé sur la pièce de carrosserie. Le troisième et le quatrième axe sont parallèles au deuxième axe. La jambe de levage est associée à un actionneur linéaire se déplaçant entre une position déployée et une position rétractée entre deux limites de course pour mettre en rotation la deuxième branche ou la première branche, respectivement autour du quatrième axe ou du troisième axe et faire passer alternativement le volet aérodynamique d'une position sortie à une position rentrée.

Ce volet aérodynamique se caractérisé en ce que, lorsque le volet est en position sortie sous l'effet respectivement de la rétractation ou du déploiement de l'actionneur linéaire, et que la première et la deuxième branche font entre elles, autour du deuxième axe, un angle égal à 180° additionné ou réduit respectivement d'une valeur comprise entre 1° d'angle et 5° d'angle, une force s'exerçant verticalement du haut vers le bas sur le volet aérodynamique a pour effet de repousser l'actionneur linéaire en limite de course respectivement en position rétractée ou en position déployée.

Le volet aérodynamique est articulé autour d'un axe fixe monté sur l'élément de carrosserie, formé à titre préférentiel par le hayon arrière du véhicule. Ce montage simplifié permet d'obtenir un becquet mobile apte à dévier une partie du flux d'air circulant autour de la carrosserie du véhicule. De par sa construction, l'actionneur sert de limiteur de course mécanique permettant de recevoir, lorsque le véhicule roule à grande vitesse, les efforts engendrés par le volet sous l'action des forces aérodynamiques sans consommer d'énergie électrique. De plus, la mise en rotation du volet aérodynamique est obtenue à l'aide d'un actionneur agissant sur une simple jambe de levage en autorisant un grand débattement angulaire du volet aérodynamique qu'il est possible d'obtenir avec un déploiement de relativement faible amplitude de la jambe de levage.

L'invention peut aussi comprendre d'autres caractéristiques optionnelles prises seules ou en combinaison :
- Le volet aérodynamique comprend une ou deux jambes de levage, associées chacune à un actionneur linéaire comprenant une première et une deuxième extrémité, dans lequel chaque première extrémité, de chacun des actionneurs linéaires est montée en rotation sur la pièce de carrosserie, et chaque deuxième extrémité de chacun des actionneurs linéaires est montée en rotation sur la première ou la deuxième branche de chacune des jambes de levage autour d'un cinquième axe, parallèle au deuxième axe
- Le volet aérodynamique comprend deux jambes de levage, associées à un actionneur linéaire commun comprenant une première et une deuxième extrémité, dans lequel, la première extrémité et la deuxième extrémité de l'actionneur linéaire sont montées chacune en rotation autour d'un cinquième axe disposé chacun sur la première et la deuxième branche de chacune des jambes de levage, chaque cinquième axe étant parallèle au deuxième axe.

- Le deuxième axe est sensiblement perpendiculaire au premier axe.
- La deuxième branche d'au moins une jambe de levage se prolonge au-delà du deuxième axe de rotation et comporte une portée de blocage pour venir en contact avec la première branche de ladite jambe de levage lorsque le volet aérodynamique est en position sortie.
- Le cinquième axe de rotation est confondu avec le deuxième axe de rotation.

L'invention a également pour objet une pièce de carrosserie formée par un hayon de véhicule automobile comprenant un volet aérodynamique selon l'une quelconque des caractéristiques citées précédemment et monté en rotation autour d'un sixième axe, parallèle au premier axe, sur un châssis du véhicule.

### Brève description des figures

L'invention sera mieux comprise à la lecture de la description qui va suivre donnée uniquement à titre d'exemple et faite en se référant aux dessins annexés dans lesquels :
- [Fig. 1] est une vue schématique générale de la partie arrière d'un véhicule.
- [Fig. 2] est une vue schématique en perspective de l'arrière d'un véhicule supportant un volet aérodynamique en position sortie.
- [Fig. 3] est une vue schématique en perspective d'un hayon arrière supportant un volet aérodynamique en position sortie selon l'invention.
- [Fig. 4] est une vue schématique en perspective d'un arrière de véhicule supportant un volet aérodynamique selon un premier mode de réalisation de l'invention.
- [Fig. 5] est une vue schématique en coupe du volet en position rentrée selon le premier mode de réalisation de l'invention.
- [Fig. 6] est une vue schématique en coupe du volet aérodynamique en position sortie selon le premier mode de réalisation de l'invention.
- [Fig. 7] est une vue schématique en coupe du volet aérodynamique en position rentrée selon une première variante du premier mode de réalisation de l'invention.
- [Fig. 8] est une vue schématique en coupe du volet aérodynamique en position sortie selon la première variante du premier mode de réalisation de l'invention.
- [Fig. 9] est une vue schématique en coupe du volet aérodynamique en position rentrée selon une deuxième variante du premier mode de réalisation de l'invention.
- [Fig. 10] est une vue schématique en coupe du volet aérodynamique en position sortie selon la deuxième variante du premier mode de réalisation de l'invention.
- [Fig. 11] est une vue schématique en perspective d'un hayon arrière supportant un volet aérodynamique selon un deuxième mode de réalisation de l'invention.
- [Fig. 12] est une vue schématique en coupe du volet aérodynamique en position rentrée selon le deuxième mode de réalisation de l'invention.
- [Fig. 13] est une vue schématique en coupe du volet aérodynamique en position sortie selon le deuxième mode de réalisation de l'invention.
- [Fig. 14] est une vue schématique en perspective de la jambe de levage en position semi déployée.
- [Fig. 15] est une vue en perspective de la jambe de levage en position déployée.
- [Fig. 16] est une vue schématique en coupe de la charnière entre le volet et la pièce de carrosserie en position rentrée.
- [Fig. 17] est une vue schématique en coupe de la charnière entre le volet et la pièce de carrosserie en position sortie.

### Description détaillée

Dans ce qui suit on se référera au repère orthonormé du véhicule dans lequel l'axe XX' représente la direction longitudinale, l'axe YY' représente la direction transversale, et l'axe ZZ' représente la direction verticale.

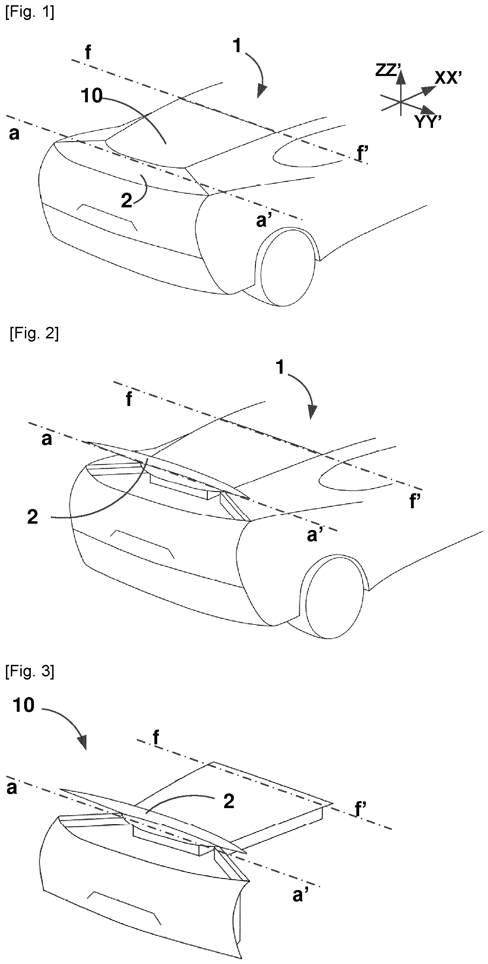

La figure 1 illustre schématiquement un arrière de véhicule, assimilé à sa caisse 1 comportant une pièce de carrosserie mobile, ici un hayon arrière 10, articulé autour d'un sixième axe de rotation ff' disposé transversalement. Le hayon 10 supporte un volet aérodynamique 2 articulé autour d'un premier axe de rotation aa', parallèle au sixième axe ff' et à la direction transversale YY'.

La figure 2 illustre le même arrière de véhicule dans lequel le volet aérodynamique 2 est en position sortie.

Enfin, la figure 3 illustre de manière schématique le hayon 10 lui-même formant l'élément de carrosserie du véhicule.

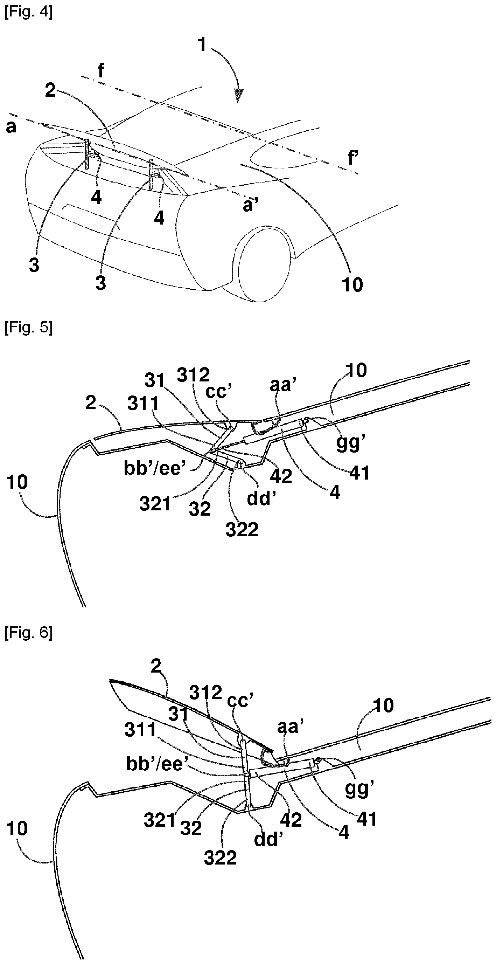

La figure 4 représente une vue schématique en perspective du volet aérodynamique 2 en position sortie selon un premier mode de réalisation de l'invention.

Selon ce premier mode de réalisation de l'invention, le volet aérodynamique 2 est animé en rotation autour du premier axe aa' par deux jambes de levage 3 équipée chacune d'un actionneur linéaire 4.

On entend ici par actionneur linéaire un actionneur comprenant une première et une deuxième extrémité se déplaçant, entre deux limites de course, entre une position déployée et une position rétractée le long d'une direction rectiligne. En limite de course, l'actionneur repose sur une butée l'empêchant de s'étendre au-delà. A titre d'exemple, l'usage d'un vérin à vis convient parfaitement.

La figure 5 représente une vue en coupe, dans un plan perpendiculaire à la direction transversale YY' du mécanisme selon le premier mode de réalisation de l'invention.

Une jambe de levage 3 est formée d'une première et d'une deuxième branche, respectivement 31 et 32, comprenant chacune une première extrémité, respectivement 311 et 321, et une deuxième extrémité, respectivement 312 et 322.

Les premières extrémités 311 et 321 de chacune des branches 31 et 32 sont liées l'une à l'autre par une articulation mobile en rotation autour d'un deuxième axe bb' formant en quelque sorte le genou articulé de la jambe de levage.

La seconde extrémité 312 de la première branche 31 est montée en rotation autour d'un troisième axe cc' sur le volet aérodynamique 2, et la seconde extrémité 322 de la deuxième branche 32 est montée en rotation autour d'un quatrième axe dd' sur la pièce de carrosserie 10. Le troisième axe cc' et le quatrième axe dd' sont parallèles au deuxième axe bb'.

Pour faire passer le volet aérodynamique 2 d'une position rentrée comme cela est illustré à la figure 5 à une position sortie comme cela est illustré à la figure 6, il suffit de mettre la deuxième branche 32 de la jambe de levage 3 en rotation autour du quatrième axe dd'.

L'actionneur linéaire 4 exerce sur la deuxième branche 32 un couple apte à mettre ladite deuxième branche 32 en rotation autour du quatrième axe dd'.

Dans ce premier mode de réalisation de l'invention, la première extrémité 41 de l'actionneur linéaire 4 est articulée sur le hayon 10 autour d'un septième axe de rotation gg'. La seconde extrémité 42 de l'actionneur 4 est articulée sur la deuxième branche 32 autour d'un cinquième axe de rotation ee'. Pour obtenir un plus grand bras de levier et minimiser la puissance de l'actionneur, le cinquième axe de rotation ee' peut être confondu avec le deuxième axe bb' comme cela est représenté sur les figures. On observera ici que ce cinquième axe de rotation peut se situer en un point quelconque de la deuxième branche 32 placé entre l'axe bb' et l'axe dd'.

De manière équivalente, il est également possible de prévoir que la deuxième extrémité 42 de l'actionneur linéaire 4 est connectée par ledit cinquième axe de rotation ee' sur la première branche 31 de la jambe de levage 3. Cette option présente toutefois l'inconvénient de rendre l'actionneur plus visible depuis l'extérieur du véhicule.

En ajustant la position du cinquième axe de rotation ee' sur la deuxième branche 32, la longueur des branches et la position du troisième axe cc' sur le volet aérodynamique 2 par rapport au premier axe aa', on obtient un débattement plus ou moins important du volet 2 autour du premier axe de rotation aa' avec une économie de mouvements de l'actionneur et des branches formant la jambe de levage. Ainsi, à titre d'exemple, on peut réduire le débattement de l'actionneur linéaire 4 en rapprochant le cinquième axe ee' du quatrième axe dd' ou encore, on peut augmenter le débattement angulaire du volet aérodynamique 2 en rapprochant le troisième axe cc' du premier axe aa'.

De manière plus générale, et bien que cette forme de réalisation alternative soit plus onéreuse, la mise de rotation de la deuxième branche 32 autour du quatrième axe dd' peut se faire par tout autre moyen tel que, à titre d'exemple un arbre moteur formant l'axe dd', solidaire de la deuxième branche 32 et entrainé en rotation par un moteur rotatif couplé à un motoréducteur.

On observera également que le volet aérodynamique 2 est ici animé en rotation préférentiellement par deux jambes de levage indépendantes mais qu'un résultat similaire pourrait être obtenu avec une seule jambe de levage 3 associée à un seul actionneur linéaire 4 positionné par exemple dans l'axe central du véhicule.

Préférentiellement, dans ce premier mode de réalisation, le cinquième axe de rotation ee' et le septième axe de rotation gg' sont parallèles au deuxième axe de rotation bb', de sorte que les branches 31 et 32 de la jambe de levage 3 se déplacent dans le même plan que l'actionneur linéaire 4.

Comme cela est représenté sur les figures 5 et 6, le deuxième axe de rotation bb' est sensiblement parallèle au premier axe de rotation aa'. Toutefois, on observera ici que les deuxième axes bb' de chacune des jambes de levage ne sont pas nécessairement parallèles entre eux. En d'autres termes, les jambes de levage peuvent se mouvoir dans des plans qui ne sont pas parallèles entre eux et qui ne sont pas perpendiculaires à la direction transversale YY'.

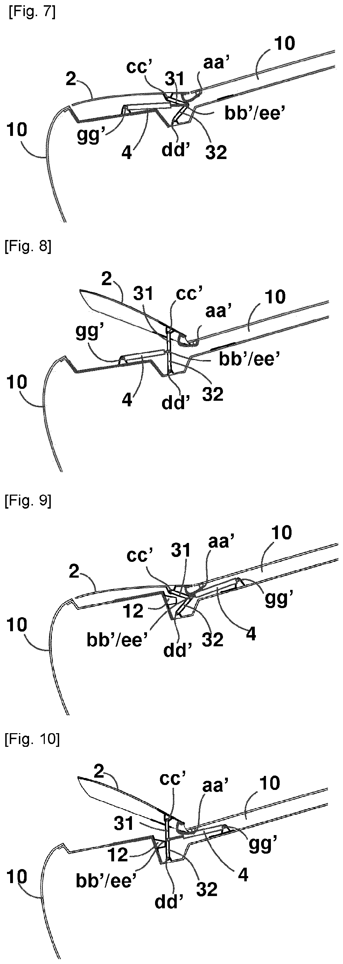

En passant d'une position déployée comme cela est représenté à la figure 7 vers une position rétractée comme cela est représenté à la figure 8, l'actionneur linéaire entraine en rotation la deuxième branche 32 autour de l'axe dd', et provoque le mouvement du volet aérodynamique 2 d'une position sortie à une position rentrée comme cela est représenté sur les figures 5 et 6. Dans ces figures, l'actionneur linéaire est disposé dans les montants du hayon.

Les figures 7 et 8 illustrent une première variante de réalisation de ce premier mode de réalisation de l'invention dans laquelle le point d'attache de l'actionneur linéaire 4 autour de l'axe gg' est situé dans la partie basse (ou arrière) du hayon 10.

Les figures 9 et 10 illustrent une deuxième variante de réalisation du premier mode de réalisation de l'invention dans laquelle l'actionneur linéaire 4 passe de la position rétractée à la position déployée pour faire passer le volet aérodynamique 2 de la position rentrée à la position sortie.

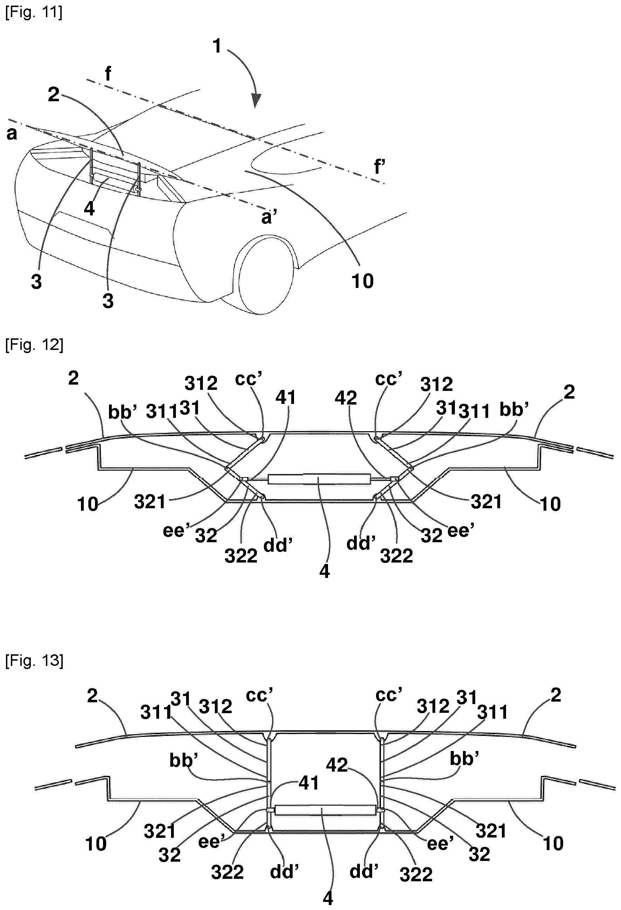

La figure 11 illustre un deuxième mode de réalisation de l'invention dans laquelle le volet aérodynamique 2 est actionné par deux jambes de levage 3 réunies par un actionneur linéaire commun 4.

De manière similaire à ce qui a été exposé précédemment et en référence aux figure 12 et 13, chacune des jambes de levage 3 est formée d'une première et d'une deuxième branche, respectivement 31 et 32, comprenant chacune une première extrémité respectivement 311 et 321 et une deuxième extrémité, respectivement 312 et 322. Les premières extrémités 311 et 321 de chacune des branches sont liées l'une à l'autre par une articulation mobile en rotation autour d'un deuxième axe bb'. La seconde extrémité 312 de chaque première branche 31 est montée en rotation autour d'un troisième axe cc' sur le volet 2 et la seconde extrémité 322 de chaque deuxième branche 32 est montée en rotation autour d'un quatrième axe dd' sur la pièce de carrosserie 10. Le troisième axe cc' et le quatrième axe dd' sont sensiblement parallèles entre eux et au deuxième axe bb'.

La première extrémité 41 de l'actionneur linéaire 4 est montée en rotation autour d'un cinquième axe ee' disposé sur la deuxième branche 32 d'une jambe de levage 3, et la deuxième extrémité 42 de l'actionneur linéaire 4 est montée en rotation autour d'un cinquième axe ee', disposé sur la deuxième branche 32 de l'autre jambe de levage 3. Ce cinquième axe ee' est parallèle au deuxième axe bb'. Ce cinquième axe ee' est ici disposé sur la deuxième branche 32 de chacune des jambes de levage 3 en un point quelconque situé entre le quatrième axe dd' et le deuxième axe bb'. Mais il pourrait tout aussi bien, pour les mêmes raisons que précédemment, être disposé sur la première branche 31 ou encore être confondu avec le deuxième axe bb'.

Dans ce deuxième mode de réalisation de l'invention, le deuxième axe bb' est sensiblement perpendiculaire au premier axe aa'.

En passant de la position rétractée, illustrée à la figure 12, à une position déployée illustrée à la figure 13, l'actionneur linéaire 4 met en rotation les deuxièmes branches 32 de chacune des jambes de levage et fait passer le volet aérodynamique 2 de la position rentrée à la position sortie.

Il est également possible, dans ce deuxième mode d'exécution de l'invention de disposer les jambes de levage de sorte que le volet passe de la position rentrée à la position sortie lorsque l'actionneur linéaire passe de la position rétractée à la position déployée à l'image de la cinématique telle que décrite ci-dessus dans la deuxième alternative de réalisation du premier mode d'exécution de l'invention.

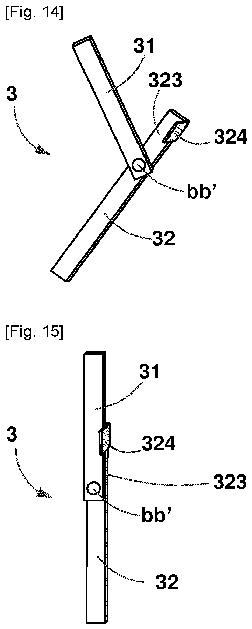

Les figures 14 et 15 illustrent un perfectionnement de l'invention dans laquelle la deuxième branche 32 de la jambe de levage 3 comprend une prolongation 323 s'étendant au-delà du deuxième axe bb' et comporte à son extrémité une portée de blocage 324 disposée sensiblement dans un plan parallèle audit deuxième axe bb'.

Lorsque le volet aérodynamique 2 est en position sortie, la première branche 31 est sensiblement alignée avec la deuxième branche 32 et la portée de blocage 324 vient alors en appui contre la première branche 31, de manière à bloquer la rotation des deux branches au-delà d'un angle sensiblement égal à 180°.

Pour produire un effet similaire, il est également possible de prévoir que, lorsque le volet aérodynamique 2 est en position sortie et que l'actionneur linéaire est en position rétractée, la première et la seconde branche, respectivement 31 et 32, fassent entre elles un angle, mesuré du côté de l'actionneur, très légèrement supérieur à 180° et compris par exemple entre 181° et 185°, de sorte qu'une force s'exerçant verticalement du haut vers le bas sur le volet aérodynamique 2 a pour effet de comprimer l'actionneur linéaire 4 et de le repousser en position rétractée. Ainsi, lorsque le véhicule roule à grande vitesse, le volet aérodynamique étant en position sortie, la pression aérodynamique exercée par l'air sur le volet aérodynamique 2 se transmet par la jambe de levage à l'actionneur linéaire et exerce sur ce dernier une force ayant pour effet de repousser l'actionneur. On s'arrange alors pour régler la course de l'actionneur linéaire de sorte que, lorsque la première et la deuxième branche de la jambe de levage font entre elles un angle compris entre 181° et 185°, l'actionneur soit en limite de course correspondant à la mise en butée de l'actionneur 4 dans sa position retractée.

De manière équivalente, lorsque l'actionneur linéaire est en position déployée lorsque le volet aérodynamique est en position ouverte, on s'arrange à l'inverse pour que la première et la seconde branche, respectivement 31, 32, de la jambe de levage 3 fassent entre elles un angle, mesuré du côté de l'actionneur, compris entre 179° et 175° de sorte qu'une force s'exerçant du haut vers le bas sur le volet aérodynamique a pour effet d'étendre l'actionneur linéaire en position déployée jusqu'à ce qu'il atteigne une position en limite de course correspondant à la mise en butée de l'actionneur en position déployée.

Cet artifice de montage constitue un moyen stable permettant de maintenir le volet aérodynamique en position ouverte sans qu'il soit nécessaire de faire un apport d'énergie au niveau de l'actionneur linéaire 4 pour maintenir le volet en position.

Lorsque l'actionneur est en position déployée pour maintenir le volet aérodynamique en position ouverte (voir deuxième alternative du premier mode de réalisation) il est possible de disposer une butée 12 sur la pièce de carrosserie de manière à mettre la jambe de levage 3 en appui sur la butée 12, comme cela est illustré à la figure 10.

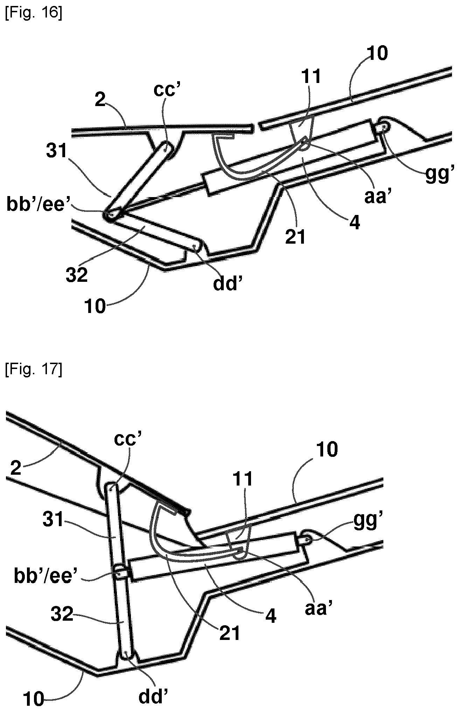

Les figures 16 et 17 illustrent une vue de détail de l'articulation du premier axe aa'. Un support 11 est monté solidaire de la pièce de carrosserie 10 et un col de cygne 21, monté solidaire du volet aérodynamique 2, est articulé autour du premier axe aa' sur ledit support 11. Ce type de montage, connu de l'homme du métier, permet d'éviter la mise en contact du bord du volet aérodynamique 2 avec le bord du hayon 10 et supprime tout risque de frottement des bords entre eux susceptibles de dégrader la couche de protection (telle que de la peinture) déposée sur ces pièces et participant à l'aspect extérieur du véhicule

### NOMENCLATURE

- 1: Châssis de véhicule/véhicule.
- 10: Pièce de carrosserie/Hayon.
- 11: Support.
- 12: Butée.
- 2: Volet aérodynamique.
- 21: Col de cygne.
- 3: Jambe de levage.
- 31: Première branche.
- 311: Première extrémité de la première branche.
- 312: Deuxième extrémité de la première branche.
- 32: Deuxième branche.
- 321: Première extrémité de la deuxième branche.
- 322: Deuxième extrémité de la deuxième branche.
- 323: Extension.
- 324: Portée de blocage.
- 4: Actionneur linéaire.
- 41: Première extrémité de l'actionneur linéaire
- 42: Deuxième extrémité de l'actionneur linéaire.
- aa': Premier axe de rotation.
- bb": Deuxième axe de rotation.
- cc': Troisième axe de rotation.
- dd': Quatrième axe de rotation.
- ee': Cinquième axe de rotation.
- ff': Sixième axe de rotation.
- gg': Septième axe de rotation.
- XX': Direction longitudinale.
- YY': Direction transversale.
- ZZ': Direction verticale.

## Revendications

1. Volet aérodynamique (2) monté en rotation autour d'un premier axe (aa') sur une pièce de carrosserie (10) de véhicule automobile, ledit volet (2) comprenant au moins une jambe de levage (3) formée d'une première (31) et d'une deuxième (32) branche comprenant chacune une première (311, 321) et une deuxième (312, 322) extrémité, les premières extrémités (311, 321) de chacune des branches (31, 32) étant liées l'une à l'autre par une articulation mobile en rotation autour d'un deuxième axe (bb'), la seconde extrémité (312) de la première branche (31) étant montée en rotation autour d'un troisième axe (cc') disposé sur le volet aérodynamique (2) et la seconde extrémité (322) de la deuxième branche (32) étant montée en rotation autour d'un quatrième axe (dd') disposé sur la pièce de carrosserie (10), le troisième (cc') et le quatrième (dd') axe étant parallèles au deuxième axe (bb'), ladite jambe de levage (3) étant associée à un actionneur linéaire (4) se déplaçant entre une position déployée et une position rétractée entre deux limites de course pour mettre en rotation la deuxième branche (32) ou la première branche (31) respectivement autour du quatrième axe (dd') ou du troisième axe (cc') et faire passer alternativement le volet aérodynamique (2) d'une position sortie à une position rentrée **caractérisé en ce que**, lorsque le volet est en position sortie sous l'effet respectivement de la rétractation ou du déploiement de l'actionneur linéaire, et que la première (31) et la deuxième branche (32) font entre elles, autour du deuxième axe (bb'), un angle égal à 180° additionné ou réduit respectivement d'une valeur comprise entre 1° d'angle et 5° d'angle, une force s'exerçant verticalement du haut vers le bas sur le volet aérodynamique (2) a pour effet de repousser l'actionneur linéaire (4) en limite de course respectivement en position rétractée ou en position déployée.

2. Volet aérodynamique (2) selon la revendication 1, comprenant une ou deux jambes de levage (3), associées chacune à un actionneur linéaire (4) comprenant une première (41) et une deuxième (42) extrémité, dans lequel chaque première extrémité (41), de chacun des actionneurs linéaires (4) est montée en rotation sur la pièce de carrosserie (10), et chaque deuxième extrémité (42) de chacun des actionneurs linéaires (4) est montée en rotation sur la première (31) ou la deuxième branche (32) de chacune des jambes de levage (3) autour d'un cinquième axe (ee'), parallèle au deuxième axe (bb').

3. Volet aérodynamique (2) selon la revendication 1 ou la revendication 2, comprenant deux jambes de levage (3), associées à un actionneur linéaire commun (4) comprenant une première (41) et une deuxième (42) extrémité et dans lequel, la première extrémité (41) et la deuxième extrémité (42) de l'actionneur linéaire (4) sont montées chacune en rotation autour d'un cinquième (ee') axe disposé chacun sur la première (31) et la deuxième branche (32) de chacune des jambes de levage (3), chaque cinquième axe (ee') étant parallèle au deuxième axe (bb').

4. Volet aérodynamique (2) selon la revendication 3, dans lequel le deuxième axe (bb') est sensiblement perpendiculaire au premier axe (aa').

5. Volet aérodynamique (2) selon l'une quelconque des revendications 1 à 4, dans lequel, la deuxième branche (31) d'au moins une jambe de levage (3) se prolonge au-delà du deuxième axe de rotation (bb') et comporte une portée de blocage (324) pour venir en contact avec la première branche (31) de ladite jambe de levage (3) lorsque le volet aérodynamique (2) est en position sortie.

6. Volet aérodynamique (2) selon l'une quelconque des revendications 2 à 5, dans lequel le cinquième axe de rotation (ee') est confondu avec le deuxième axe de rotation (bb').

7. Pièce de carrosserie formée par un hayon de véhicule automobile (10) comprenant un volet aérodynamique (2) selon l'une quelconque des revendications précédentes et monté en rotation autour d'un sixième axe (ff'), parallèle au premier axe (aa'), sur un châssis du véhicule (1).
